# EUROPÄISCHE PATENTSCHRIFT

(11) **EP 3 953 093 B1**
(45) Veröffentlichungstag und Bekanntmachung des Hinweises auf die Patenterteilung: **07.09.2022**
(21) Anmeldenummer: 20716511.9
(22) Anmeldetag: 09.04.2020
(51) Int. Cl.: B23K 9/09, B23K 9/095, B23K 9/12, B23K 9/173

(54) **MEHRFACH IMPULSSCHWEISSVERFAHREN UND ANORDNUNG**
MULTIPLE PULSE WELDING METHOD AND ARRANGEMENT
PROCÉDÉ ET DISPOSITION DE SOUDAGE À ARC PULSÉ MULTIPLE

(30) Priorität: 10.04.2019 EP 19168538
(43) Veröffentlichungstag der Anmeldung: 16.02.2022
(73) Patentinhaber: FRONIUS INTERNATIONAL GmbH, 4643 Pettenbach (AT)
(72) Erfinder: SÖLLINGER, Dominik, 4643 Pettenbach (AT)
(74) Vertreter: Patentanwälte Pinter & Weiss OG
(86) Internationale Anmeldenummer: PCT/EP2020/060249
(87) Internationale Veröffentlichungsnummer: WO 2020/208184

(56) Entgegenhaltungen:
- DE-A1-102007 016 103
- DE-U1-202011 110 601
- US-A1- 2008 011 728

## Beschreibung

Die gegenständliche Erfindung betrifft ein Verfahren zum Durchführen eines Mehrfach-Impulsschweißverfahrens, bei dem zumindest zwei Impulsschweißprozesse gleichzeitig betrieben werden, wobei die zumindest zwei Impulsschweißprozesse jeweils mit einem Schweißstrom mit Impulsstromparametern, mit einer Impulsfrequenz und mit einer in bekannter Weise mit der Impulsfrequenz gekoppelten Schweißdrahtvorschubgeschwindigkeit durchgeführt werden, wobei ein erster Impulsschweißprozess eine erste Impulsfrequenz vorgibt und sich die in einem zweiten Impulsschweißprozess einzustellende zweite Impulsfrequenz aus der ersten Impulsfrequenz ergibt. Ferner betrifft die Erfindung eine Anordnung zum Durchführen des Verfahrens.

Die gegenständliche Erfindung betrifft das Impulsschweißen mit abschmelzender Elektrode mit Impulslichtbogen. Bei diesem Schweißverfahren wechseln sich regelmäßig mit vorgegebener Impulsfrequenz ein Grundschweißstrom und ein dazu erhöhter Impulsschweißstrom ab. Während der Grundschweißstromphase brennt der Lichtbogen mit geringer Leistung, um das Schmelzbad flüssig zu halten. Während der Impulsstromphase bildet sich ein Tropfen des als Schweißdraht zugeführten Zusatzwerkstoffes der letztendlich abgelöst wird und ins Schmelzbad fällt. Der Schweißdraht bildet gleichzeitig die Elektrode aus (abschmelzende Elektrode), beispielsweise beim MIG (Metall Inertgas) oder MAG (Metall Aktivgas) Schweißen. In Abhängigkeit vom Drahtdurchmesser und Zusatzwerkstoff sollen beim MIG/MAG Schweißen die Schweißdrahtvorschubgeschwindigkeit und die Impulsfrequenz so gewählt und aneinander angepasst werden, dass bei jedem Stromimpuls ein Tropfen erzeugt und abgelöst wird. Schweißdrahtvorschubgeschwindigkeit und Impulsfrequenz sind dabei voneinander abhängig. Bei unpassend gewählten Werten für die Schweißdrahtvorschubgeschwindigkeit und die Impulsfrequenz kann kein stabiler Schweißprozess realisiert werden und/oder kann keine gute Schweißqualität erzielt werden. Ein Schweißzyklus bestehend aus der Grundschweißstromphase und der Impulsschweißstromphase und wiederholt sich beim Impulsschweißen mit der Impulsfrequenz. Mit dem Impulsschweißen kann der Wärmeeintrag in das Werkstück reduziert und kontrolliert werden, womit auch dünnere Werkstücke geschweißt werden können. Zusätzlich ergeben sich mit dem Impulsschweißen qualitativ hochwertige Schweißergebnisse, beispielsweise lassen sich damit Schweißspritzer stark reduzieren.

Um die Schweißleistung zu erhöhen, sind auch Mehrfach-Impulsschweißverfahren, beispielsweise ein Tandem-Impulsschweißverfahren, bekannt geworden, bei denen zumindest zwei Impulsschweißverfahren gleichzeitig betrieben werden. Vorzugsweise schmelzen dabei zumindest zwei Schweißdrähte in ein gemeinsames Schmelzbad ab. Die einzelnen Impulsschweißverfahren können aber auch jeweils ein eigenes Schmelzbad haben. Hierfür werden für jeden Schweißprozess eigenständige Schweißgeräte benötigt, also jeweils eine Stromquelle, ein Schweißbrenner und eine Schweißdrahtvorschubeinheit. Mit jedem Schweißgerät wird ein Impulsschweißverfahren realisiert. Das Mehrfach-Impulsschweißen kann so betrieben werden, dass die Schweißprozesse gestartet werden und unabhängig voneinander betrieben werden, dass also der Schweißstrom, die Schweißdrahtvorschubgeschwindigkeit und/oder die Impulsfrequenz für jeden Schweißprozess eigens eingestellt werden. Das ist für den Schweißer aber aufwendiger, da in allen Schweißgeräten die Schweißparameter entsprechend gesetzt werden müssen. Abgesehen davon hat man damit wenig bis keinen Einfluss auf eine allfällige gegenseitige Beeinflussung durch die gleichzeitig ablaufenden Schweißprozesse, was die Schweißqualität vermindern kann.

Daher ist auch schon ein Tandem-Impulsschweißverfahren mit synchronisierten Schweißprozessen bekannt geworden, bei dem einem Schweißgerät eine Impulsfrequenz vorgegeben wird, der das andere Schweißgerät nachfolgt. Beide Schweißprozesse sind damit aufeinander synchronisiert und schweißen mit derselben Impulsfrequenz. Ein solches Mehrfach-Impulsschweißverfahren, gemäß dem Oberbegriff der Ansprüche 1 und 7, geht beispielsweise aus der US 2008/011728 A1 hervor

Die DE 20 2011 110 601 U1 beschreibt ein Tandem-Impulsschweißverfahren, bei dem ein Phasenwinkle zwischen den beiden Impulstromformen um einen vorgegebenen Wert voneinander abweicht, sodass sich die Lichtbögen der beiden Schweißverfahren nicht gegenseitig negativ beeinflussen.

Nicht aufeinander angepasste Impulsschweißprozesse können in einem Mehrfach-Impulsschweißverfahren zu Problemen führen. Beim MIG/MAG Schweißen kann es beispielsweise problematisch sein, wenn ein Schweißdraht in einem Impulsschweißprozess mit einer anderen Schweißdrahtvorschubgeschwindigkeit zugeführt werden als im anderen Impulsschweißprozess, was aber häufig zur Erhöhung der Prozessstabilität erwünscht ist. Eine geringere Schweißdrahtvorschubgeschwindigkeit erfordert aber normalerweise auch eine niedrigere Impulsfrequenz. Bei einem zu großen Unterschied zwischen der Schweißdrahtvorschubgeschwindigkeit des führenden Schweißprozesses und des nachgeführten Schweißprozesses kann es daher passieren, dass der nachgeführte Schweißprozess mit einer zu hohen Impulsfrequenz (die vom führenden Schweißprozess übernommen wurde) betrieben wird, wodurch sich unter Umständen mit dem nachgeführten Schweißprozess kein stabiler Schweißprozess realisieren lässt oder sich ein schlechteres Schweißergebnis (z.B. Schweißspritzer) ergibt.

Um dieses Problem zu beheben wurde in der DE 10 2007 016 103 A1 bereits vorgeschlagen, die Impulsfrequenz eines nachgeführten Impulsschweißprozesses eines Tandem-Impulsschweißverfahrens in einem ganzzahligen Verhältnis zur Impulsfrequenz des führenden Impulsschweißprozesses einzustellen. Dabei sollen die Impulsfrequenzen der beiden Schweißprozesse so gewählt werden, dass sich die Impulsstromphasen nicht überschneiden. Damit kann im nachgeführten Impulsschweißprozess mit einer niedrigeren Impulsfrequenz geschweißt werden, als im führenden Impulsschweißprozess. Nachdem die Impulsfrequenz aber nur in einem ganzzahligen Verhältnis geändert werden kann, kann es sein, dass der Impulsschweißprozess des nachgeführten Schweißprozesses nicht mehr mit

idealen Schweißparametern durchgeführt wird. Beispielsweise kann das dazu führen, dass die Tropfenablöse am Lichtbogen des nachgeführten Impulsschweißprozesses nicht mehr richtig funktioniert. Das kann zu einer Verschlechterung der Schweißqualität führen.

Es ist daher eine Aufgabe der gegenständlichen Erfindung ein Verfahren zur Durchführung eines Mehrfach-Impulsschweißverfahrens anzugeben, bei dem die beteiligten Impulsschweißprozesse mit möglichst idealen Einstellungen betrieben werden können.

Diese Aufgabe wird erfindungsgemäß durch die Merkmale der unabhängigen Ansprüche gelöst. Auf diese Weise kann in allen Impulsschweißprozessen des Mehrfach-Impulsschweißverfahrens sichergestellt werden, dass immer mit idealeren Schweißbedingungen geschweißt werden kann. Für die Erzielung eines guten Schweißergebnisses ist das Verhältnis aus dem Effektivwert des Schweißstromes und der Schweißdrahtvorschubgeschwindigkeit maßgebend, das nun auch bei nicht idealen Einstellwerten für den Impulsschweißprozess eingehalten werden kann. Damit kann in jedem Impulsschweißprozess eine optimale Tropfenablöse und auch eine möglichst konstante Lichtbogenlänge gewährleistet werden, was für die erzielte Schweißqualität wichtig ist.

Vorteilhafterweise ergibt sich die zweite Impulsfrequenz aus der ersten Impulsfrequenz aus einem vorgegebenen ganzzahligen Impulsfrequenzverhältnis zwischen der ersten Impulsfrequenz und der zweiten Impulsfrequenz. Auf diese Weise kann die Synchronisation der Impulsschweißprozesse einfach und für das Schweißverfahren vorteilhaft erfolgen.

Um zu große Eingriffe in den zumindest einen Schweißparameter zu verhindern, kann vorgesehen sein, dass zusätzlich das Impulsfrequenzverhältnis geändert wird, um das tatsächliche Verhältnis auf das ideale Verhältnis zu ändern. Der zumindest eine Schweißparameter kann dann gegebenenfalls zusätzlich zur Feineinstellung geändert werden.

Auf einfache Weise kann der Effektivwert des Schweißstromes, und damit das Verhältnis beeinflusst werden, wenn zumindest eine Impulsstromparameter des Schweißstromes des zweiten Impulsschweißprozesses auf den idealen Effektivwert als Sollwert geregelt oder gesteuert wird. Dabei kann als zumindest ein Impulsstromparameter ein Impulsstrom, ein Grundstrom, eine Impulsstromdauer, eine Grundstromdauer, eine Stromanstiegsflanke oder eine Stromabfallsflanke des Schweißstromes geändert werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Anordnung zum Durchführen eines Mehrfach-Impulsschweißverfahrens,
Fig.2 die Schweißzyklen in einem Mehrfach-Impulsschweißverfahren mit gleichen Impulsfrequenzen,
Fig.3 die Schweißzyklen in einem Mehrfach-Impulsschweißverfahren mit ungleichen Impulsfrequenzen,
Fig.4 eine Schweißkennlinie zwischen Schweißdrahtvorschubgeschwindigkeit und Impulsfrequenz und
Fig.5 einen Zusammenhang zwischen dem Effektivwert des Schweißstromes und der Impulsfrequenz.

Die Erfindung wird nachfolgend für ein Tandem-Impulsschweißverfahren, also mit zwei Impulsschweißprozessen, als Beispiel eines Mehrfach-Impulsschweißverfahrens, erläutert. Es ist aber natürlich denkbar, die nachfolgenden Ausführungen auf ein Mehrfach-Impulsschweißverfahren mit mehr als zwei Impulsschweißverfahren auszuweiten. Ein Mehrfach-Impulsschweißverfahren zeichnet sich insbesondere dadurch aus, dass gleichzeitig zumindest zwei Impulsschweißprozesse laufen, bei einem Tandem-Impulsschweißverfahren folglich zwei Impulsschweißprozesse. Die mehreren Impulsschweißprozesse können alle in dasselbe Schmelzbad arbeiten, es können aber auch verschiedene Impulsschweißprozesse in teilweise verschiedene Schmelzbäder arbeiten.

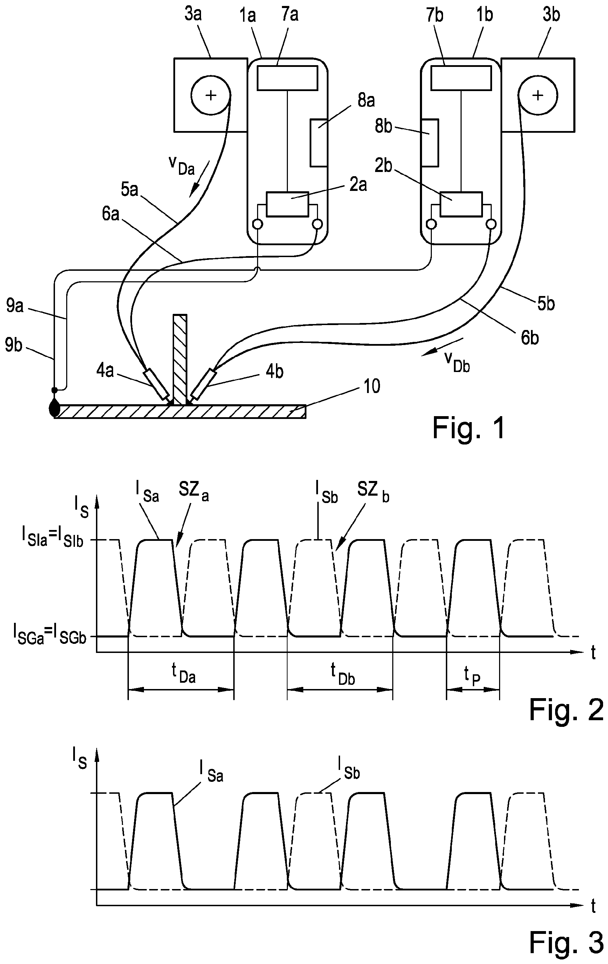

In Fig.1 ist eine mögliche Konfiguration für ein Tandem-Impulsschweißverfahren, als Beispiel eines in der Praxis häufig anzutreffenden Mehrfach-Impulsschweißverfahrens mit zwei Impulsschweißprozessen, schematisch dargestellt. Es sind zwei separate Schweißgeräte 1a, 1b mit jeweils einer Stromquelle 2a, 2b, einer Schweißdrahtvorschubeinheit 3a, 3b und einem Schweißbrenner 4a, 4b vorgesehen. Die Stromquellen 2a, 2b stellen jeweils die benötigte Schweißspannung und den benötigten Schweißstrom I_{S} zur Verfügung, die jeweils an die Schweißelektrode des Schweißprozesses, angelegt wird. Dabei fungiert ein Schweißdraht 5a, 5b gleichzeitig auch als abschmelzende Schweißelektrode. Dazu kann in einem Schweißbrenner 4a, 4b beispielsweise eine Kontakthülse vorgesehen sein, an die die Schweißspannung angelegt wird, z.B. über eine Schweißleitung 6a, 6b, und die vom Schweißdraht 5a, 5b kontaktiert wird. Damit fließt ein bestimmter Schweißstrom I_{S} über die Schweißelektrode, wobei hierfür natürlich auch eine Masseleitung 9a, 9b zur Kontaktierung des Werkstückes und zum Schließen des Schweißstromkreises vorgesehen ist. Der Schweißdraht 5a, 5b wird dem Schweißbrenner 4a, 4b von der Schweißdrahtvorschubeinheit 3a, 3b jeweils mit einer bestimmten Schweißdrahtvorschubgeschwindigkeit v_{Da}, v_{Db} zugeführt. Die Schweißdrahtvorschubeinheit 3a, 3b kann jeweils im Schweißgerät 1a, 1b integriert sein, kann aber auch eine separate Einheit sein. Die Schweißgeräte 1a, 1b, gegebenenfalls auch mit den jeweiligen Schweißdrahtvorschubeinheiten 3a, 3b, können dabei natürlich auch in einem gemeinsamen Gehäuse angeordnet sein.

Der Schweißdraht 5a, 5b und die Schweißleitung 6a, 6b eines Schweißgerätes 1a, 1b, und gegebenenfalls auch weitere Leitungen zwischen der Stromquelle 2a, 2b und dem Schweißbrenner 4a, 4b (beispielsweise eine Steuerleitung, eine Leistung für ein Schutzgas oder eine Kühlmittelleitung), können auch in einem gemeinsamen, oder auch mehreren, Schlauchpaket geführt sein. Das Schlauchpaket kann an den Schweißbrenner 4a, 4b und an das Schweißgerät 1a, 1b über geeignete Kupplungen angekoppelt werden.

In einem Schweißgerät 1a, 1b ist auch eine Steuereinheit 7a, 7b vorgesehen, die den mit dem jeweiligen Schweißgerät 1a, 1b durchgeführten Impulsschweißprozess steuert und überwacht. Die Steuereinheit 7a, 7b steuert dabei beispielsweise die Stromquellen 2a, 2b zur Erzeugung des Schweißstromes I_{S}. Hierfür sind in der Steuereinheit 7a, 7b, oder der Stromquelle 2a, 2b, benötigte Schweißparameter für den durchzuführenden Impulsschweißprozess, wie beispielswiese die Impulsfrequenz f_{D}, die Schweißdrahtvorschubgeschwindigkeit v_{D}, der Impulsstrom I_{SI}, der Grundstrom I_{SG}, die Impulsstromdauer, Grundstromdauer, Anstiegs- / Abfallszeiten der Stromflanken etc., vorgegeben oder einstellbar. Zur Eingabe oder zur Anzeige gewisser Schweißparameter oder eines Schweißstatus kann am Schweißgerät 1a, 1b auch eine Eingabe-/Ausgabeeinheit 8a, 8b vorgesehen sein. Ein solches Schweißgerät 1a, 1b ist natürlich hinlänglich bekannt und muss hier nicht näher beschrieben werden. Für ein Mehrfach-Impulsschweißverfahren mit mehr als zwei Impulsschweißprozessen sind natürlich entsprechend mehr Schweißgeräte 1a, 1b vorgesehen.

Zur Realisierung eines Tandem-Impulsschweißprozesses sind die beiden Schweißbrenner 4a, 4b im gezeigten Ausführungsbeispiel örtlich relativ zueinander angeordnet, und führen eine Schweißung an einem Werkstück 10 durch. Im Ausführungsbeispiel der Fig.1 werden zwei getrennte Schweißnähte erzeugt. Die Schweißbrenner 4a, 4b arbeiten damit in getrennte Schmelzbäder. Selbstverständlich könnten die Schweißbrenner 4a, 4b aber auch in ein gemeinsames Schmelzbad arbeiten. Die Anordnung der Schweißbrenner 4a, 4b zueinander kann fix sein, beispielsweise indem beide Schweißbrenner 4a, 4b an einem (nicht dargestellten) Schweißroboter angeordnet werden, der beide Schweißbrenner 4a, 4b führt. Die Anordnung kann aber auch veränderlich sein, beispielsweise in dem je ein Schweißbrenner 4a, 4b von einem Schweißroboter geführt wird. Es ist auch unerheblich, ob die Schweißbrenner 4a, 4b bezogen auf die Schweißrichtung räumlich hintereinander, nebeneinander oder sonst irgendwie versetzt zu einander angeordnet sind. Ebenso ist es unerheblich, ob mit einem Impulsschweißprozess ein Verbindungsschweißen oder ein Auftragsschweißen, oder ein sonstiges Schweißverfahren, realisiert wird. Diese Ausführungen gelten natürlich in analoger Weise auch für einen Mehrfach-Impulsschweißprozess mit mehr als zwei Impulsschweißprozessen.

Anhand der Fig.2 wird das hinlänglich bekannte Impulsschweißverfahren anhand des Verlaufs der Schweißströme I_{Sa}, I_{Sb} der beiden Impulsschweißprozesse über die Zeit t erläutert. Während des Impulsschweißens wechseln sich ein Grundstrom I_{SGa}, I_{SGb} und ein demgegenüber erhöhter Impulsstrom I_{SIa}, I_{SIb} periodisch mit einer vorgegebenen Impulsfrequenz f_{Da}, f_{Db} ab. Die Impulsfrequenz f_{Da}, f_{Db} ergibt sich natürlich als Kehrwert der Periodendauer t_{Da}, t_{Db} eines Schweißzyklus SZa, SZb bestehend aus einer Grundstromphase mit dem Grundstrom I_{SGa}, I_{SGb} und einer Impulsstromphase mit dem Impulsstrom I_{SIa}, I_{SIb}. Während der Impulsstromphase soll jeweils ein Schweißtropfen vom Schweißdraht 5a, 5b in das jeweilige Schmelzbad 11 abgelöst werden. Während einer Schweißung kann sich die Impulsfrequenz f_{Da}, f_{Db} und/oder der Wert des Grundstromes I_{SGa}, I_{SGb} oder des Impulsstromes I_{SIa}, I_{SIb} auch ändern.

In Fig.2 sind die Werte der Grundströme I_{SGa}, I_{SGb} und die Werte der Impulsströme I_{SIa}, I_{SIb} der Impulsschweißprozesse gleich, was aber natürlich nicht zwingend erforderlich ist. In der Regel werden die Stromwerte in den Impulsschweißprozessen unterschiedlich sein. Ebenso sind im Beispiel nach der Fig.2 die Impulsfrequenzen f_{Da}, f_{Db} gleich, was ebenfalls nicht unbedingt erforderlich ist. Ferner erkennt man in Fig.2, dass die Schweißzyklen SZa, SZb der Impulsschweißprozesse um eine bestimmte Phasenverschiebung tp versetzt sind, hier 180°, d.h., dass Stromimpulse mit Impulsstrom der Impulsschweißprozesse in diesem Beispiel über die Zeit t abwechselnd gesetzt sind. Selbstverständlich ist aber auch jede andere Phasenverschiebung, insbesondere auch Null, denkbar und einstellbar.

Die Impulsstromdauern und die Grundstromdauern in den jeweiligen Schweißzyklen SZa, SZb müssen natürlich ebenfalls nicht gleich sein und können sich während des Schweißens ebenso ändern. Gleiches gilt für andere Impulsstromparameter der Schweißströme I_{S1}, I_{S2}, wie beispielsweise Flankenanstiegs- und Flankenabfallszeiten, Dauern der Impulsphasen oder Grundstromphasen, Werte der Impuls- oder Grundströme.

Die zeitlichen Verläufe der Schweißströme I_{Sa}, I_{Sb} sind in Fig.2 natürlich idealisiert und vereinfacht dargestellt. In echt werden sich natürlich gewisse Stromrampen an den Flanken, die auch einstellbar sein können, ergeben. Ebenso ist es oftmals vorgesehen, dass der Schweißstrom I_{S} beim Übergang vom Impulsstrom I_{SI} zum Grundstrom I_{SG} stufenförmig, oder mit einem anderen Stromverlauf, abfällt, um die Tropfenablöse zu unterstützen. Auch sind oftmals in der Grundstromphase kurze Zwischenstromimpulse vorgesehen, um die Prozessstabilität zu erhöhen. Das ändert aber nichts an der Periodendauer t_{Da}, t_{Db} eines Schweißzyklus SZa, SZb und an der sich daraus ergebenden Impulsfrequenz f_{Da}, f_{Db}.

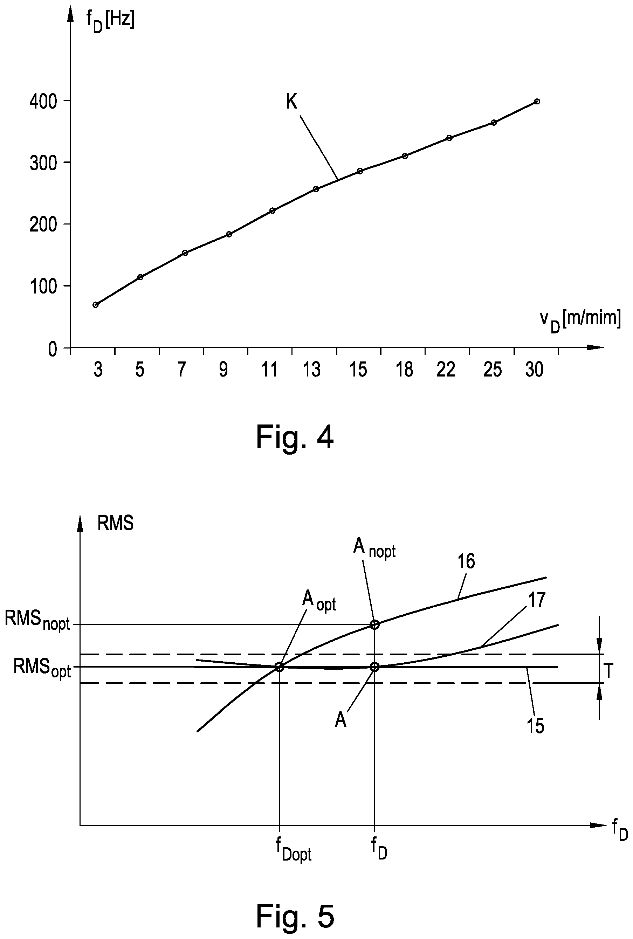

Die Impulsfrequenz f_{D} und die Schweißdrahtvorschubgeschwindigkeit v_{D} sind in einem Impulsschweißprozess gekoppelt und voneinander abhängig, wie anhand der Fig.4 dargestellt ist. Es ist ersichtlich, dass die Impulsfrequenz f_{D} ansteigt, wenn die Schweißdrahtvorschubgeschwindigkeit v_{D} ansteigt und umgekehrt. Dieser Zusammenhang ist entweder bekannt oder kann empirisch oder aus geeigneten Modellen ermittelt werden, auch in Abhängigkeit von verschiedenen Prozessparametern, wie z.B. verschiedene Schweißdrähte (z.B. Material, Dicke, usw.), verschiedene Nahtformen, usw., und kann als Kennlinie K in den Schweißgeräten 1a, 1b hinterlegt sein. In welcher Form die Kennlinie K hinterlegt ist, beispielsweise als Tabelle, als Modell (auch in Abhängigkeit von anderen Parametern wie z.B. Material und Dicke) oder mittels einer Formel (z.B. angenäherte Gerade oder Kurve) spielt dabei keine Rolle.

Bei einem erfindungsgemäßen Mehrfach-Impulsschweißprozess sind die Impulsschweißprozesse aufeinander synchronisiert, indem die Impulsfrequenzen f_{Da}=1/t_{Da}, f_{Db}=1/t_{Db} der Impulsschweißprozesse in einem bestimmten vorgegebenen Bezug zueinander stehen. Vorzugsweise gilt bei Synchronisation der Impulsfrequenzen foa, f_{Db}, dass eine Impulsfrequenz f_{Da} in einem ganzzahligen Impulsfrequenzverhältnis zur anderen Impulsfrequenz f_{Db} steht. Das für das durchzuführende Mehrfach-Impulsschweißverfahren gewünschte Impulsfrequenzverhältnis der Impulsfrequenzen f_{Da}, f_{Db} zueinander ist in den Schweißgeräten 1a, 1b vorgegeben oder eingestellt. Im Beispiel der Fig.2 ist die Impulsfrequenz f_{Da}, beispielsweise des führenden Impulsschweißprozesses, gleich wie die Impulsfrequenz f_{Db}, beispielsweise des nachgeführten Impulsschweißprozesses. Im Ausführungsbeispiel nach Fig.3 ist die Impulsfrequenz f_{Da}, beispielsweise der führenden Impulsschweißprozesses, doppelt so hoch wie die Impulsfrequenz f_{Db}, beispielsweise des nachgeführten Impulsschweißprozesses, was aber auch umgekehrt sein kann.

Üblicherweise wird der führende Impulsschweißprozess die höhere Impulsfrequenz f_{Da} aufweisen und der nachgeführte Impulsschweißprozess die demgegenüber niedrigere oder gleiche Impulsfrequenz f_{Db}. Im Fall eines Mehrfach-Impulsschweißverfahrens gibt es einen führenden Impulsschweißprozess und mehrere nachgeführte Impulsschweißprozesse, wobei auch in diesem Fall der führende Impulsschweißprozess vorzugsweise die höchste Impulsfrequenz aufweist und die nachgeführten Impulsschweißprozesse demgegenüber niedrigere oder gleiche Impulsfrequenzen. Die Impulsfrequenzen der nachgeführten Impulsschweißprozesse müssen aber nicht zwingend gleich sein.

Welcher Impulsschweißprozess der führende und welcher der nachgeführte ist kann an den Schweißgeräten 1a, 1b vorgegeben oder eingestellt werden und kann sich während dem Schweißen auch ändern. Die Schweißgeräte 1a, 1b können für Einstellungen auch über eine Kommunikationsleitung miteinander, und auch mit einer übergeordneten Steuereinheit, verbunden sein. Dabei kann die Steuereinheit auch vorgeben, welcher Impulsschweißprozess der führende sein soll.

Durch die Synchronisation der Impulsfrequenz eines nachgeführten Impulsschweißprozesses auf die Impulsfrequenz des führenden Impulsschweißprozesses (oder umgekehrt) über das Impulsfrequenzverhältnis kann aber der sich synchronisierende Impulsschweißprozess negativ beeinflusst werden.

Das Schweißergebnis kann negativ beeinflusst werden, wenn in einem Impulsschweißprozess mit einer Schweißdrahtvorschubgeschwindigkeit v_{D} geschweißt werden soll, die aufgrund der Kennlinie K nicht zur sich aus dem Impulsfrequenzverhältnis ergebenden Impulsfrequenz passt. Beispielsweise soll ein erster Impulsschweißprozess mit den Einstellwerten für die Schweißdrahtvorschubgeschwindigkeit v_{Da}=16m/min und einer damit gekoppelten Impulsfrequenz (aus der Kennlinie K) f_{Da}=300Hz betrieben werden. Ein auf den ersten Impulsschweißprozess synchronisierter zweiter Impulsschweißprozess soll aufgrund von Vorgaben mit einer Schweißdrahtvorschubgeschwindigkeit v_{Da}=10m/min betrieben werden, was aufgrund der Kopplung eine ideale Impulsfrequenz f_{Db}=150Hz erfordern würde. Aufgrund des eingestellten Impulsfrequenzverhältnisses von f_{Da}/f_{Db}=1 muss der zweite Impulsschweißprozess aber tatsächlich mit 300Hz betrieben werden. Diese nicht idealen Einstellungen im zweiten Impulsschweißprozess können zu einer unerwünschten Veränderung der Lichtbogenlänge im Impulsschweißprozess führen. Beispielsweise kann die Lichtbogenlänge im Impulsschweißprozess ansteigen und der Lichtbogen kann abreißen, weil der Schweißdraht 5b schneller abbrennt. Der Lichtbogen kann aber auch zu kurz werden, wenn der Schweißdraht 5b zu langsam abbrennt, was wiederum zu lang andauernden Kurzschlüssen, und damit im Zusammenhang stehenden Schweißnahtfehlern, führen kann. Das kann den Impulsschweißprozess stören und die Schweißqualität negativ beeinflussen, z.B. weil die Tropfenablöse nicht mehr richtig funktioniert. Im schlimmsten Fall wird der Impulsschweißprozess instabil und/oder funktioniert nicht mehr ordnungsgemäß, beispielsweise führt das zu Schweißspritzern, zum Verlust des gemeinsamen Schmelzbades, zu Einbrandkerben, zu Poren in der Schweißnaht, zu zu viel Abbrand der Legierungselemente, usw. Um das abzuschwächen, kann vorgesehen sein, dass für den sich synchronisierenden Impulsschweißprozess aus der eingestellten Schweißdrahtvorschubgeschwindigkeit v_{Db} aus der hinterlegten Kennlinie K die zugehörige gekoppelte Impulsfrequenz f_{Db} entnommen wird und das auf die nächste ganze Zahl gesetzte Verhältnis zwischen der neuen Impulsfrequenz f_{Da} im führenden Impulsschweißprozess und der entnommenen Impulsfrequenz f_{Db} im nachgeführten Impulsschweißprozess als neues Impulsfrequenzverhältnis ermittelt und neu eingestellt wird. Die Impulsfrequenz f_{Db} im sich synchronisierenden Impulsschweißprozess wird dann aus der Impulsfrequenz f_{Da} im führenden Impulsschweißprozess und dem neu ermittelten Impulsfrequenzverhältnis ermittelt und eingestellt. Damit wird die Abweichung im nachgeführten Impulsschweißprozess zwischen dem idealen Verhältnis von Schweißdrahtvorschubgeschwindigkeit v_{Db} und Impulsfrequenz f_{Db} zum tatsächlich eingestellten Verhältnis kleiner.

Das gleiche Problem kann entstehen, wenn in einem Mehrfach-Impulsschweißverfahren am Beginn oder während des Schweißens die Schweißdrahtvorschubgeschwindigkeit v_{Da} oder die Impulsfrequenz foa einer der Impulsschweißprozesse verändert wird. Das führt aufgrund des eingestellten Impulsfrequenzverhältnisses zwischen den Impulsfrequenzen f_{Da}, f_{Db} in den Impulsschweißprozessen ebenso zu einer Veränderung der Impulsfrequenz f_{Db} des sich synchronisierenden Impulsschweißprozesses. Allerdings passt diese veränderte Impulsfrequenz f_{Db} nun nicht mehr zur im Impulsschweißprozess eingestellten Schweißdrahtvorschubgeschwindigkeit v_{Db}.

Um dieses Problem zu beheben ist nun erfindungsgemäß vorgesehen, dass eine Anpassung von Schweißparametern vorgenommen wird, um die oben erläuterten möglichen Auswirkungen einer Abweichung von idealen Einstellwerten zu vermindern. Zu solchen nicht idealen Einstellwerten kann es beispielsweise bei einer Änderung einer Schweißdrahtvorschubgeschwindigkeit v_{Da}, v_{Db}, eines Schweißstromes I_{Sa}, I_{Sb}, einer Schweißspannung, der Materialstärke des zu schweißenden Werkstücks, usw. kommen. Erfindungsgemäß wird zumindest ein Schweißparameter eines sich synchronisierenden (beispielsweise des nachgeführten) Impulsschweißprozesses geändert, sodass das tatsächliche Verhältnis V zwischen dem tatsächlichen Effektivwert des Schweißstromes I_{Sb} und der tatsächlichen Schweißdrahtvorschubgeschwindigkeit v_{Db} auf das ideale Verhältnis Vₒₚₜ, das sich aus den idealen Einstellwerten ergibt, geändert wird. Das tatsächliche Verhältnis V ergibt sich somit aus den tatsächlichen Einstellwerten, mit denen geschweißt wird. Das ideale Verhältnis Vₒₚₜ ergibt sich aus den Werten, die aufgrund der Kopplung zwischen Impulsfrequenz f_{D} und Schweißdrahtvorschubgeschwindigkeit v_{D} eingestellt werden müssten, aber aufgrund des vorgegebenen Impulsfrequenzverhältnisses nicht eingestellt werden können. Der zumindest eine zu ändernde Schweißparameter ist damit ein Impulsstromparameter, der den zeitlichen Verlauf des Schweißstromes I_{Sb} (also die Kurvenform) verändert, also beispielsweise den Impulsstrom I_{SI}, den Grundstrom I_{SG}, die Impulsstromdauer und Grundstromdauer (vorzugsweise bezogen auf die Dauer eines Schweißzyklus SZ), Anstiegs- / Abfallszeiten der Stromflanken, etc., was den Effektivwert des Schweißstromes I_{S} beeinflusst. Es kann aber auch die Schweißdrahtvorschubgeschwindigkeit v_{Db} selbst als Schweißparameter verändert werden.

Die Erfindung beruht somit darauf, dass aus einem bekannten Zusammenhang (Kennlinie K) zwischen der Impulsfrequenz f_{D} und der Schweißdrahtvorschubgeschwindigkeit v_{D} eines Impulsschweißprozesses, ideale Einstellwerte für die Impulsfrequenz f_{D} und für die Schweißdrahtvorschubgeschwindigkeit v_{D} ermittelt werden, wobei für die Ermittlung entweder für die Impulsfrequenz f_{D} oder die Schweißdrahtvorschubgeschwindigkeit v_{D} der vorgegebene Wert verwendet wird. Mit den idealen Einstellwerten kann ein idealer Effektivwert RMSₒₚₜ des Schweißstromes I_{S} ermittelt werden, aus dem dann mit dem idealen Einstellwert der Schweißdrahtvorschubgeschwindigkeit v_{D} ein ideales Verhältnis Vₒₚₜ zwischen dem idealen Effektivwert RMSₒₚₜ und der idealen Schweißdrahtvorschubgeschwindigkeit v_{D} ermittelt wird. Dieses ideale Verhältnis Vₒₚₜ wird dann durch Änderung zumindest eines Schweißparameters eingestellt. Hierbei kann die einzustellende Schweißdrahtvorschubgeschwindigkeit v_{D} des Impulsschweißprozesses über den Zusammenhang mit einer idealen Impulsfrequenz f_{D} gekoppelt sein oder die einzustellende Impulsfrequenz f_{D} des Impulsschweißprozesses mit einer idealen Schweißdrahtvorschubgeschwindigkeit v_{D} gekoppelt sein. Damit kann aus dem Schweißstrom I_{S} mit der idealen Impulsfrequenz f_{Dopt} ein idealer Effektivwert RMSₒₚₜ des Schweißstromes ermittelt werden und daraus ein ideales Verhältnis Vₒₚₜ zwischen diesem idealen Effektivwert RMSₒₚₜ und der vorgegebenen Schweißdrahtvorschubgeschwindigkeit v_{D} ermittelt werden. Gleichfalls kann aus dem Schweißstrom I_{S} mit der einzustellenden Impulsfrequenz f_{D} ein idealer Effektivwert RMSₒₚₜ des Schweißstromes I_{S} ermittelt wird und daraus ein ideales Verhältnis Vₒₚₜ zwischen diesem idealen Effektivwert RMSₒₚₜ und der idealen Schweißdrahtvorschubgeschwindigkeit v_{D} ermittelt werden.

Der Effektivwert einer zeitlich veränderlichen elektrischen Größe ist bekanntermaßen der quadratische Mittelwert dieser elektrischen Größe über die Zeit. Der Effektivwert des Schweißstromes I_{S} kann daher beispielsweise über eine Periodendauer t_{D} eines Schweißzyklus SZ berechnet werden. Vorteilhafter ist es jedoch, den Effektivwert über mehrere Periodendauern t_{D} zu berechnen (beispielsweise als gleitender Mittelwert) oder die für verschiedene Periodendauern t_{D} ermittelten Effektivwerte zu mitteln.

Welcher Schweißparameter geändert wird, wobei natürlich auch mehrere Schweißparameter gleichzeitig verändert werden können, ist für die Erfindung nebensächlich. Es kann beispielsweise ein Algorithmus implementiert sein, der diese Veränderung vornimmt. Der Algorithmus kann aufgrund von hinterlegten empirischen Daten, beispielsweise einem Zusammenhang zwischen dem Effektivwert und gewissen Impulsstromparametern, Änderungen an zumindest einem Schweißparameter vornehmen. Ebenso könnte ein Modell, entweder ein physikalisches oder ein trainiertes (z.B. neuronale Netzwerk), vorgesehen sein, das eine gewünschte Änderung des Effektivwertes auf eine bestimmte Änderung des zumindest einen Schweißparameters abbildet. In gleicher Weise könnte eine Optimierung implementiert sein, die den zumindest einen Schweißparameter derartig verändert, sodass der gewünschte Effektivwert bestmöglich angenähert wird. Dazu könnte beispielsweise eine Kostenfunktion der Abweichung zwischen dem aktuellen Effektivwert und dem gewünschten Effektivwert (auch als quadratische Abweichung) durch Verändern des zumindest einen Schweißparameters minimiert werden. Dabei können auch Randbedingungen, wie vorgegebene Grenzen (mögliche Minimal- oder Maximalwerte) des Schweißparameters, berücksichtigt werden. In einer vorteilhaften Implementierung können im Schweißgerät 1a, 1b Kennfelder hinterlegt sein, die den Einfluss bestimmter Schweißparameter auf den Effektivwert des Schweißstromes I_{S} abbildet. Aus den hinterlegten Kennfeldern können dann

Änderungen von Schweißparametern entnommen werden, um den Effektivwert in gewünschter Weise zu verändern. Dabei wird vorteilhafterweise darauf geachtet, dass die Tropfenablöse trotz Anpassungen des Schweißstromes I_{S} sichergestellt ist. Hierfür können auch Grenzwerte für die verschiedenen Schweißparameter hinterlegt sein, gegebenenfalls auch in Abhängigkeit von anderen Parametern des Mehrfach-Impulsschweißverfahrens, beispielsweise Materialstärke des zu schweißenden Werkstücks, Durchmesser / Material des Schweißdrahtes, usw.

In einer vorteilhaften Ausgestaltung kann beispielsweise ein Kennfeld hinterlegt sein, z.B. in Form einer Tabelle, in der hinterlegt ist, um wieviel (z.B. in Prozent oder absolut) zumindest ein Impulsstromparameter verändert werden muss, um eine Abweichung (z.B. in Prozent oder absolut) der Impulsfrequenz f_{D} von der idealen Impulsfrequenz (oder die Abweichung der Schweißdrahtvorschubgeschwindigkeit v_{D} von der idealen Schweißdrahtvorschubgeschwindigkeit) auszugleichen, um den Effektivwert RMS so zu ändern, dass das gewünschte ideale Verhältnis Vₒₚₜ erreicht. Beispielsweise könnte in der Tabelle als Impulstromparameter die Änderung von Grundstrom I_{SG}, Impulsstrom I_{SI} und Impulsstromdauer in Abhängigkeit der Änderung der Impulsfrequenz f_{D} hinterlegt sein.

In der Regel wird es nicht möglich sein, das eingestellte tatsächliche Verhältnis V exakt auf das ideale Verhältnis Vₒₚₜ aus dem Effektivwert und der Schweißdrahtvorschubgeschwindigkeit v_{Db} zu ändern, weil die Schweißparameter natürlich nicht beliebig geändert werden können. Dass auf dieses ideale Verhältnis Vₒₚₜ geändert werden soll, bedeutet damit im Sinne der Erfindung, dass das Verhältnis Vₒₚₜ im Wesentlichen erreicht wird, das sich ergebende tatsächliche Verhältnis V somit vorzugsweise innerhalb eines definierten Toleranzfensters um das gewünschte ideale Verhältnis Vₒₚₜ liegen soll, wobei das Toleranzfenster vorzugsweise ± 25%, ganz besonders vorzugsweise ±10%, des gewünschten Verhältnisses ist. Das wird mit Bezugnahme auf die Fig.5 erläutert.

Die Fig.5 zeigt beispielhaft den Zusammenhang zwischen der Impulsfrequenz f_{D} und dem Effektivwert RMS des Schweißstromes I_{S} eines Impulsschweißprozesses. Aufgrund der Kennlinie K (Fig.4) müsste der Impulsschweißprozess aufgrund einer eingestellten Schweißdrahtvorschubgeschwindigkeit v_{D} in einem idealen Arbeitspunkt Aₒₚₜ mit einer idealen Impulsfrequenz f_{Dopt} betrieben werden, was zu einem Effektivwert RMSₒₚₜ und zu einem idealen Verhältnis Vₒₚₜ zwischen diesen beiden Größen führt. Aufgrund des vorgegebenen Impulsfrequenzverhältnisses muss der Impulsschweißprozess aber mit einer tatsächlichen Impulsfrequenz f_{D} betrieben werden, was einen tatsächlichen Arbeitspunkt Aₙₒₚₜ mit nicht idealen Einstellwerten für den Impulsschweißprozess und einen tatsächlichen Effektivwert RMSₙₒₚₜ (Linie 16) und ein tatsächliches Verhältnis V ergeben würde. Das Ziel der Erfindung ist es, das sich aus den idealen Einstellwerten im idealen Arbeitspunkt Aₒₚₜ ergebende ideale Verhältnis Vₒₚₜ einzustellen (Linie 15). Dazu wird im dargestellten Ausführungsbeispiel zumindest ein Impulsstromparameter des Schweißstromes I_{S} als Schweißparameter verändert, sodass bei der aufgrund des vorgegebenen Impulsfrequenzverhältnisses einzustellenden Impulsfrequenz f_{D} der Effektivwert RMSₒₚₜ und damit das ideale Verhältnis Vₒₚₜ erzielt wird (Linie 17), vorzugsweise innerhalb eines Toleranzfensters T. Mit den derart ermittelten Einstellwerten für den Schweißstrom I_{S} und der Schweißdrahtvorschubgeschwindigkeit v_{D} im Arbeitspunkt A wird der Impulsschweißprozess ausgeführt.

In gleicher Weise kann natürlich vorgegangen werden, wenn anstelle eines Impulsstromparameters die Schweißdrahtvorschubgeschwindigkeit v_{D} als Schweißparameter verändert wird, um das ideale Verhältnis Vₒₚₜ einzustellen. Gleichermaßen können natürlich auch die Schweißdrahtvorschubgeschwindigkeit v_{D} und zumindest ein Impulsstromparameter als Schweißparameter verändert werden, um das ideale Verhältnis Vₒₚₜ einzustellen.

In einer möglichen Implementierung der Erfindung könnte auch eine Regelung für den Effektivwert RMS des Schweißstromes I_{S} vorgesehen sein, um das ideale Verhältnis Vₒₚₜ bestmöglich einzustellen. Dazu kann ein Regler implementiert sein, beispielsweise als Software in der Steuereinheit 7 eines Impulsschweißprozesses, um zumindest einen Impulsstromparameter als Schweißparameter zu regeln, sodass während des Schweißens das ideale Verhältnis Vₒₚₜ als Sollwert eingeregelt wird. Gleichfalls kann eine Steuerung implementiert sein, die das ideale Verhältnis Vₒₚₜ als Sollwert einstellt.

Zusätzlich zur Veränderung des Effektivwerts des Schweißstromes I_{Sb} und/oder der Schweißdrahtvorschubgeschwindigkeit v_{Db} zur Erzielung des idealen Verhältnisses Vₒₚₜ kann in einer Ausgestaltung der Erfindung auch das Impulsfrequenzverhältnis geändert werden.

Wenn für die Erzielung des idealen Verhältnisses Vₒₚₜ die Schweißdrahtvorschubgeschwindigkeit v_{Db} und/oder der Effektivwert des Schweißstromes I_{Sb} zu stark geändert werden müsste, kann beispielsweise vorgesehen sein, zuerst das Impulsfrequenzverhältnis, und damit die Impulsfrequenz f_{Db} des sich synchronisierenden Impulsschweißprozesses, auf einen anderen ganzzahligen größeren oder kleineren Wert zu ändern. Beispielsweise kann das gemacht werden, wenn die Schweißdrahtvorschubgeschwindigkeit v_{Db} oder der Effektivwert RMS um mehr ±25% geändert werden müsste. Nach der Änderung des Impulsstromverhältnisses kann dann bei Bedarf auch noch das Verhältnis V angepasst werden.

Wird zur Erzielung des idealen Verhältnisses Vₒₚₜ die Schweißdrahtvorschubgeschwindigkeit v_{Db} im nachgeführten Impulsschweißprozess geändert, wird diese vorzugsweise auf den Wert gesetzt, der sich aufgrund der eingestellten Impulsfrequenz f_{Db} (die auf die Impulsfrequenz foa des führenden Impulsschweißprozesses synchronisiert ist und damit festgelegt ist) aus der Kennlinie K (Fig.4) des Impulsschweißprozesses ergibt.

Zur Steuerung der Impulsschweißprozesse eines Mehrfach-Impulsschweißverfahrens kann damit erfindungsgemäß wie folgt vorgegangen werden.

Grundlegende vorbereitende Einstellungen, wie die Festlegung welcher Impulsschweißprozess der führende und welche der nachgeführte ist oder die Festlegung der Schweißdrahtvorschubgeschwindigkeiten v_{Da}, v_{Db} und der Impulsfrequenzen f_{Da}, f_{Db} oder die Arbeitspunkte der Impulsschweißprozesse werden dabei als gegeben angenommen. Mit diesen grundlegenden Einstellungen wird das Mehrfach-Impulsschweißverfahren gestartet, d.h. es werden die Lichtbögen in bekannter Weise gezündet und die Synchronisation der beteiligten Impulsschweißprozesse durchgeführt.

Nachdem sich die Impulsfrequenz f_{Db} des nachgeführten Impulsschweißprozesses aufgrund des festgelegten ganzzahligen Impulsfrequenzverhältnisses zwischen den Impulsfrequenzen f_{Da}, f_{Db} ergibt, kann als vorbereitender Schritt auch vorgesehen sein, die Schweißdrahtvorschubgeschwindigkeit v_{Db} auf die der sich ergebenden Impulsfrequenz f_{Db} entsprechende Schweißdrahtvorschubgeschwindigkeit v_{Db} (beispielsweise anhand der hinterlegten Kennlinie K) zu ändern. Damit kann das Mehrfach-Impulsschweißverfahren auch im nachgeführten Impulsschweißprozess mit ideal zusammenpassender Impulsfrequenz f_{Db} und Schweißdrahtvorschubgeschwindigkeit v_{Db} gestartet werden. Das gleiche könnte man natürlich auch im führenden Impulsschweißprozess machen.

Mit den Vorgaben für die Schweißdrahtvorschubgeschwindigkeiten v_{Da}, v_{Db} der Impulsschweißprozesse des Mehrfach-Impulsschweißverfahrens erhält man die idealen Impulsfrequenzen f_{Da}, f_{Db}, oder umgekehrt aus den Impulsfrequenzen f_{Da}, f_{Db} die idealen Schweißdrahtvorschubgeschwindigkeiten v_{Da}, v_{Db}. Mit den bekannten Einstellwerten der Impulsstromparameter für den Schweißstrom I_{Sb} (die im Schweißgerät 1b bekannt sind) des sich synchronisierenden Impulsschweißprozesses kann der Effektivwert RMSₒₚₜ und in weiterer Folge das Verhältnis Vₒₚₜ ermittelt werden (beispielsweise mathematisch oder auch messtechnisch). Zu Beginn des Mehrfach-Impulsschweißverfahrens oder auch laufend während des Schweißens oder nur dann wenn während des Mehrfach-Impulsschweißverfahrens entweder eine Impulsfrequenz f_{Da}, f_{Db} und/oder eine Schweißdrahtvorschubgeschwindigkeit v_{Da}, v_{Db} eines Impulsschweißprozesses geändert wird, beispielsweise durch den Schweißer oder aufgrund einer Vorgabe einer übergeordneten Steuereinheit oder aufgrund eines ablaufenden Schweißprogramms, wird der tatsächliche Effektivwert RMSₙₒₚₜ und das tatsächliche Verhältnis Vₙₒₚₜ ermittelt. Damit kann zumindest ein Schweißparameter des sich synchronisierenden Impulsschweißprozesses verändert werden, um das erwünschte Verhältnis Vₒₚₜ einzustellen. Wird nun während des Mehrfach-Impulsschweißverfahrens entweder eine Impulsfrequenz f_{Da}, f_{Db} und/oder eine Schweißdrahtvorschubgeschwindigkeit v_{Da}, v_{Db} eines Impulsschweißprozesses geändert, beispielsweise durch den Schweißer oder aufgrund einer Vorgabe einer übergeordneten Steuereinheit oder aufgrund eines ablaufenden Schweißprogramms, bleiben die Impulsfrequenzen f_{Da}, f_{Db} aufgrund der Synchronisation der Schweißgeräte 1a, 1b in einem ganzzahligen Impulsfrequenzverhältnis, das entweder unverändert bleibt oder sich auch verändern kann. Das kann daher mit einem Anpassen der Impulsfrequenzen f_{Da}, f_{Db}, insbesondere der Impulsfrequenz des nachgeführten Impulsscheißprozesses einhergehen und damit mit einer Änderung des Effektivwertes RMS. Je nach Implementierung der Anpassung kann der Effektivwert des Schweißstromes I_{S} und/oder die Schweißdrahtvorschubgeschwindigkeit v_{Db} des nachgeführten Impulsschweißprozesses geändert werden, um das gewünschte idealen Verhältnis Vₒₚₜ im Wesentlichen einzustellen.

Beispielsweise kann der Änderung der Schweißdrahtvorschubgeschwindigkeit v_{Db} der Vorzug gegeben werden, wenn das ganzzahlige Impulsfrequenzverhältnis der Impulsfrequenzen f_{Da}, f_{Db} geändert wird. Dabei kann zu einer Feineinstellung zusätzlich auch noch der Effektivwert des Schweißstromes I_{S} angepasst werden. Auf der anderen Seite könnte der Anpassung des Effektivwertes der Vorzug gegeben werden, wenn sich die Schweißdrahtvorschubgeschwindigkeit v_{Db} um mehr als einen definierten Wert, um beispielsweise 10%, ändern müsste.

Das ideale Verhältnis Vₒₚₜ kann sich damit auch während des Schweißens verändern, womit auch das eine Änderung eines Schweißparameters zum Einstellen dieses geänderten idealen Verhältnisses Vₒₚₜ notwendig machen kann. Eine solche Änderung kann sich beispielsweise durch eine übergeordnete Regelung einer Lichtbogenlänge ergeben, die Änderungen des Schweißstromes I_{S} oder der Schweißdrahtvorschubgeschwindigkeit v_{D} bewirken kann.

Die Anpassung des zumindest einen Schweißparameters kann in einer Steuereinheit 7a, 7b eines Schweißgerätes 1a, 1b als Software implementiert sein. Hierfür notwendige Daten, wie beispielsweise Kennfelder, können im Schweißgerät 1a, 1b gespeichert sein.

## Patentansprüche

1. Verfahren zum Durchführen eines Mehrfach-Impulsschweißverfahrens, bei dem zumindest zwei Impulsschweißprozesse gleichzeitig betrieben werden, wobei die zumindest zwei Impulsschweißprozesse jeweils mit einem Schweißstrom (I_{Sa}, I_{Sb}) mit Impulsstromparametern, mit einer einzustellenden Impulsfrequenz (f_{Da}, f_{Db}) und mit einer einzustellenden Schweißdrahtvorschubgeschwindigkeit (v_{Da}, v_{Db}) durchgeführt werden, wobei ein erster Impulsschweißprozess eine erste Impulsfrequenz (f_{Da}) vorgibt und sich die in einem zweiten Impulsschweißprozess einzustellende zweite Impulsfrequenz (f_{Db}) aus der ersten Impulsfrequenz (f_{Da}) ergibt, **dadurch gekennzeichnet, dass** aus einem bekannten Zusammenhang zwischen der Impulsfrequenz (f_{Db}) und der Schweißdrahtvorschubgeschwindigkeit (v_{Db}) des zweiten Impulsschweißprozesses, ideale Einstellwerte für die zweite Impulsfrequenz (f_{Db}) und für die zweite Schweißdrahtvorschubgeschwindigkeit (v_{Db}) ermittelt werden, **dass** mit den idealen Einstellwerten ein idealer Effektivwert (RMSₒₚₜ) des zweiten Schweißstromes (I_{Sb}) ermittelt wird und mit dem idealen Effektivwert (RMSₒₚₜ) und dem idealen Einstellwert der zweiten Schweißdrahtvorschubgeschwindigkeit (v_{Db}) ein ideales Verhältnis (Vₒₚₜ) zwischen dem Effektivwert (RMSₒₚₜ) und der Schweißdrahtvorschubgeschwindigkeit (v_{Db}) ermittelt wird, **dass** mit dem zweiten Schweißstrom (I_{Sb}) mit der einzustellenden zweiten Impulsfrequenz (f_{Db}) ein tatsächlicher Effektivwert (RMSₙₒₚₜ) des zweiten Schweißstromes (I_{Sb}) ermittelt wird und damit ein tatsächliches Verhältnis (V) zwischen dem tatsächlichen Effektivwert (RMSₙₒₚₜ) und der einzustellenden Schweißdrahtvorschubgeschwindigkeit (v_{Db}) des zweiten Impulsschweißprozesses ermittelt wird **und dass** zumindest ein Impulsstromparameter des zweiten Schweißstromes (I_{Sb}) des zweiten Impulsschweißprozesses und/oder die Schweißdrahtvorschubgeschwindigkeit (v_{Db}) des zweiten Impulsschweißprozesses geändert wird, um das tatsächliche Verhältnis (V) auf das ideale Verhältnis (Vₒₚₜ) zu ändern.

2. Verfahren nach Anspruch 1, **dadurch gekennzeichnet, dass** die einzustellende Schweißdrahtvorschubgeschwindigkeit (v_{Db}) des zweiten Impulsschweißprozesses mit einer idealen zweiten Impulsfrequenz (f_{Dbopt}) gekoppelt ist oder die einzustellende zweite Impulsfrequenz (f_{Db}) des zweiten Impulsschweißprozesses mit einer idealen zweiten Schweißdrahtvorschubgeschwindigkeit (v_{Db}) gekoppelt ist, **dass** aus dem zweiten Schweißstrom (I_{Sb}) mit der idealen zweiten Impulsfrequenz (f_{Dopt}) ein idealer Effektivwert (RMSₒₚₜ) des zweiten Schweißstromes (I_{Sb}) ermittelt wird und daraus das ideale Verhältnis (Vₒₚₜ) zwischen diesem idealen Effektivwert (RMSₒₚₜ) und der vorgegebenen Schweißdrahtvorschubgeschwindigkeit (v_{Db}) ermittelt wird oder aus dem zweiten Schweißstrom (I_{Sb}) mit der einzustellenden zweiten Impulsfrequenz (f_{Db}) ein idealer Effektivwert (RMSₒₚₜ) des zweiten Schweißstromes (I_{Sb}) ermittelt wird und daraus ein ideales Verhältnis (Vₒₚₜ) zwischen diesem idealen Effektivwert (RMSₒₚₜ) und der idealen Schweißdrahtvorschubgeschwindigkeit (v_{Db}) ermittelt wird.

3. Verfahren nach Anspruch 1 oder 2, **dadurch gekennzeichnet, dass** sich die zweite Impulsfrequenz (f_{Db}) aus der ersten Impulsfrequenz (f_{Da}) aus einem vorgegebenen ganzzahligen Impulsfrequenzverhältnis zwischen der ersten Impulsfrequenz (f_{Da}) und der zweiten Impulsfrequenz (f_{Db}) ergibt.

4. Verfahren nach Anspruch 3, **dadurch gekennzeichnet, dass** zusätzlich das Impulsfrequenzverhältnis geändert wird, um das tatsächliche Verhältnis (V) auf das ideale Verhältnis (Vₒₚₜ) zu ändern.

5. Verfahren nach einem der Ansprüche 1 bis 4, **dadurch gekennzeichnet, dass** der Effektivwert (RMS) des Schweißstromes (I_{Sb}) des zweiten Impulsschweißprozesses durch Ändern zumindest eines Impulsstromparameters des Schweißstromes (I_{Sb}) des zweiten Impulsschweißprozesses auf den idealen Effektivwert (RMSₒₚₜ) als Sollwert geregelt oder gesteuert wird.

6. Verfahren nach einem der Ansprüche 1 bis 5, **dadurch gekennzeichnet, dass** als zumindest ein Impulsstromparameter ein Impulsstrom (I_{SIb}), ein Grundstrom (I_{SGb}), eine Impulsstromdauer, eine Grundstromdauer, eine Stromanstiegsflanke oder eine Stromabfallsflanke des zweiten Schweißstromes (I_{Sb}) geändert wird.

7. Anordnung zum Durchführen eines Mehrfach-Impulsschweißverfahrens, bei dem zumindest zwei Schweißgeräte jeweils mit einem Schweißstrom (I_{Sa}, I_{Sb}) mit Impulsstromparametern, mit einer einzustellenden Impulsfrequenz (f_{Da}, f_{Db}) und mit einer einzustellenden Schweißdrahtvorschubgeschwindigkeit (v_{Da}, v_{Db}) ausführen, wobei ein erster Impulsschweißprozess eine erste Impulsfrequenz (f_{Da}) vorgibt und sich die in einem zweiten Impulsschweißprozess einzustellende zweite Impulsfrequenz (f_{Db}) aus der ersten Impulsfrequenz (f_{Da}) ergibt, **dadurch gekennzeichnet, dass** eine Steuereinheit (7b), die den zweiten Impulsschweißprozess ausführt, eingerichtet ist, einen idealen Effektivwert (RMSₒₚₜ) des zweiten Schweißstromes (I_{Sb}) zu ermitteln, indem die Steuereinheit (7b) aus einem bekannten Zusammenhang zwischen der Impulsfrequenz (f_{Db}) und der Schweißdrahtvorschubgeschwindigkeit (v_{Db}) des zweiten Impulsschweißprozesses, ideale Einstellwerte für die zweite Impulsfrequenz (f_{Db}) und für die zweite Schweißdrahtvorschubgeschwindigkeit (v_{Db}) ermittelt, und die Steuereinheit (7b) eingerichtet ist, mit den idealen Einstellwerten den idealen Effektivwert (RMSₒₚₜ) des zweiten Schweißstromes (I_{Sb}) zu ermitteln, **dass** die Steuereinheit (7b) eingerichtet ist, mit dem idealen Effektivwert (RMSₒₚₜ) und dem idealen Einstellwert der zweiten Schweißdrahtvorschubgeschwindigkeit (v_{Db}) ein ideales Verhältnis (Vₒₚₜ) zwischen dem Effektivwert (RMSₒₚₜ) und der Schweißdrahtvorschubgeschwindigkeit (v_{Db}) zu ermitteln, **dass** die Steuereinheit (7b) eingerichtet ist, mit dem zweiten Schweißstrom (I_{Sb}) mit der einzustellenden zweiten Impulsfrequenz (f_{Db}) einen tatsächlichen Effektivwert (RMSₙₒₚₜ) des zweiten Schweißstromes (I_{Sb}) zu ermitteln und damit ein tatsächliches Verhältnis (V) zwischen dem tatsächlichen Effektivwert (RMSₒₚₜ) und der einzustellenden Schweißdrahtvorschubgeschwindigkeit (v_{Db}) des zweiten Impulsschweißprozesses zu ermitteln **und dass** die Steuereinheit (7b) eingerichtet ist, zumindest einen Impulsstromparameter des zweiten Schweißstromes (I_{Sb}) des zweiten Impulsschweißprozesses und/oder die Schweißdrahtvorschubgeschwindigkeit (v_{Db}) des zweiten Impulsschweißprozesses zu ändern, um das tatsächliche Verhältnis (V) auf das ideale Verhältnis (Vₒₚₜ) zu ändern.

8. Anordnung nach Anspruch 7, **dadurch gekennzeichnet, dass** die Steuereinheit (7b) eingerichtet ist, aus der einzustellenen Schweißdrahtvorschubgeschwindigkeit (v_{Db}) des zweiten Impulsschweißprozesses eine damit gekoppelte ideale zweiten Impulsfrequenz (f_{Dbopt}) oder aus der einzustellenden zweiten Impulsfrequenz (f_{Db}) des zweiten Impulsschweißprozesses eine damit gekoppelte ideale zweite Schweißdrahtvorschubgeschwindigkeit (v_{Db}) zu ermitteln, und die Steuereinheit (7b) eingerichtet ist, aus dem zweiten Schweißstrom (I_{Sb}) mit der idealen zweiten Impulsfrequenz (f_{Dbopt}) oder mit der einzustellenden zweiten Impulsfrequenz (f_{Db}) den idealen Effektivwert (RMSₒₚₜ) des zweiten Schweißstromes (I_{Sb}) zu ermitteln und die Steuereinheit (7b) eingerichtet ist, das ideale Verhältnis (Vₒₚₜ) zwischen diesem idealen Effektivwert (RMSₒₚₜ) und der einzustellenden oder der idealen Schweißdrahtvorschubgeschwindigkeit (v_{Db}) zu ermitteln.

## Claims

1. Method for carrying out a multiple pulse welding method in which at least two pulse welding processes are operated simultaneously, the at least two pulse welding processes each being carried out with a welding current (I_{Sa}, I_{Sb}) with pulsed current parameters, with a pulse frequency (f_{Da}, f_{Db}) to be set and with a welding wire feeding speed (v_{Da}, v_{Db}) to be set, whereas a first pulse welding process defines a first pulse frequency (f_{Da}), and the second pulse frequency (f_{Db}) to be set in a second pulse welding process results from the first pulse frequency (f_{Da}), **characterized in that** ideal setting values for the second pulse frequency (f_{Db}) and for the second welding wire feeding speed (v_{Db}) are determined from a known relationship between the pulse frequency (f_{Db}) and the welding wire feeding speed (v_{Db}) of the second pulse welding process, **in that** an ideal root-mean-square value (RMSₒₚₜ) of the second welding current (I_{Sb}) is determined by means of the ideal setting values, and an ideal ratio (Vₒₚₜ) between the root-mean-square value (RMSₒₚₜ) and the welding wire feeding speed (v_{Db}) is determined by means of the ideal root-mean-square value (RMSₒₚₜ) and the ideal setting value of the second welding wire feeding speed (v_{Db}), **in that** an actual root-mean-square value (RMSₙₒₚₜ) of the second welding current (I_{Sb}) is determined by means of the second welding current (I_{Sb}) with the second pulse frequency (f_{Db}) to be set, and from that an actual ratio (V) between the actual root-mean-square value (RMSₙₒₚₜ) and the welding wire feeding speed (v_{Db}) of the second pulse welding process that is to be set is determined, **and in that** at least one pulsed current parameter of the second welding current (I_{Sb}) of the second pulse welding process and/or the welding wire feeding speed (v_{Db}) of the second pulse welding process is changed in order to change the actual ratio (V) to the ideal ratio (Vₒₚₜ).

2. Method according to claim 1, **characterized in that** the welding wire feeding speed (v_{Db}) of the second pulse welding process that is to be set is coupled to an ideal second pulse frequency (f_{Dbopt}) or the second pulse frequency (f_{Db}) of the second pulse welding process that is to be set is coupled to an ideal second welding wire feeding speed (v_{Db}), and **in that** an ideal root-mean-square value (RMSₒₚₜ) of the second welding current (I_{Sb}) is determined from the second welding current (I_{Sb}) with the ideal second pulse frequency (f_{Dopt}) and from this the ideal ratio (Vₒₚₜ) between this ideal root-mean-square value (RMSₒₚₜ) and the predefined welding wire feeding speed (v_{Db}) is determined, or an ideal root-mean-square value (RMSₒₚₜ) of the second welding current (I_{Sb}) is determined from the second welding current (I_{Sb}) with the second pulse frequency (f_{Db}) to be set and from this an ideal ratio (Vₒₚₜ) between this ideal root-mean-square value (RMSₒₚₜ) and the ideal welding wire feeding speed (v_{Db}) is determined.

3. Method according to claim 1 or 2, **characterized in that** the second pulse frequency (f_{Db}) is obtained from the first pulse frequency (f_{Da}) from a predefined integer pulse frequency ratio between the first pulse frequency (f_{Da}) and the second pulse frequency (f_{Db}).

4. Method according to claim 3, **characterized in that** the pulse frequency ratio is also changed in order to change the actual ratio (V) to the ideal ratio (Vₒₚₜ).

5. Method according to any of claims 1 to 4, **characterized in that** the root-mean-square value (RMS) of the welding current (I_{Sb}) of the second pulse welding process is controlled in an open-loop or closed-loop manner by changing at least one pulsed current parameter of the welding current (I_{Sb}) of the second pulse welding process to achieve the ideal root-mean-square value (RMSₒₚₜ) as the target value.

6. Method according to any of claims 1 to 5, **characterized in that** a pulsed current (I_{SIb}), a base current (I_{SGb}), a pulsed current duration, a base current duration, a current rising edge or a current falling edge of the second welding current (I_{Sb}) is changed as at least one pulsed current parameter.

7. Arrangement for carrying out a multiple pulse welding method in which at least two welding devices each carry our a pulse welding process with a welding current (I_{Sa}, I_{Sb}) with pulsed current parameters, with a pulse frequency (f_{Da}, f_{Db}) to be set and with a welding wire feeding speed (v_{Da}, v_{Db}) to be set, whereas a first pulse welding process defines a first pulse frequency (f_{Da}), and the second pulse frequency (f_{Db}) to be set in a second pulse welding process results from the first pulse frequency (f_{Da}), **characterized in that** a control unit (7b) which executes the second pulse welding process is configured to determine an ideal root-mean-square value (RMSₒₚₜ) of the second welding current (I_{Sb}) **in that** the control unit (7b) determines ideal setting values for the second pulse frequency (f_{Db}) and for the second welding wire feeding speed (v_{Db}) from a known relationship between the pulse frequency (f_{Db}) and the welding wire feeding speed (v_{Db}) of the second pulse welding process, and **in that** the control unit (7b) is configured to determine the ideal root-mean-square value (RMSₒₚₜ) of the second welding current (I_{Sb}) by means of the ideal setting values, **in that** the control unit (7b) is configured to determine an ideal ratio (Vₒₚₜ) between the root-mean-square value (RMSₒₚₜ) and the welding wire feeding speed (v_{Db}) by means of the ideal root-mean-square value (RMSₒₚₜ) and the ideal setting value of the second welding wire feeding speed (v_{Db}), **in that** the control unit (7b) is configured to determine an actual root-mean-square value (RMSₙₒₚₜ) of the second welding current (I_{Sb}) by means of the second welding current (I_{Sb}) with the second pulse frequency (f_{Db}) to be set, and further determines an actual ratio (V) between the actual root-mean-square value (RMSₒₚₜ) and the welding wire feeding speed (v_{Db}) of the second pulse welding process that is to be set, **and in that** the control unit (7b) is configured to change at least one pulsed current parameter of the second welding current (I_{Sb}) of the second pulse welding process and/or the welding wire feeding speed (v_{Db}) of the second pulse welding process in order to change the actual ratio (V) to the ideal ratio (Vₒₚₜ).

8. Arrangement according to claim 7, **characterized in that** the control unit (7b) is configured to determine, from the welding wire feeding speed (v_{Db}) of the second pulse welding process that is to be set, an ideal second pulse frequency (f_{Dbopt}) coupled thereto or, from the second pulse frequency (f_{Db}) of the second pulse welding process that is to be set, an ideal second welding wire feeding speed (v_{Db}) coupled thereto, and the control unit (7b) is configured to determine the ideal root-mean-square value (RMSₒₚₜ) of the second welding current (I_{Sb}) from the second welding current (I_{Sb}) with the ideal second pulse frequency (f_{Dopt}) or with the second pulse frequency (f_{Db}) to be set, and the control unit (7b) is configured to determine the ideal ratio (Vₒₚₜ) between this ideal root-mean-square value (RMSₒₚₜ) and the welding wire feeding speed (v_{Db}) that is to be set or is ideal.

## Revendications

1. Procédé pour l'exécution d'un procédé de soudage par impulsion multiple, dans lequel au moins deux processus de soudage par impulsion sont utilisés simultanément, les au moins deux processus de soudage par impulsion étant exécutés respectivement avec un courant de soudage (I_{Sa}, I_{Sb}) ayant des paramètres de courant de soudage, avec une fréquence d'impulsions (f_{Da}, f_{Db}) à régler et avec une vitesse d'avancement de fil de soudage (v_{Da}, v_{Db}) à régler, un premier processus de soudage par impulsion prédéfinit une première fréquence d'impulsions (f_{Da}) et la deuxième fréquence d'impulsions (f_{Db}) à régler dans un deuxième processus de soudage par impulsion découle de la première fréquence d'impulsions (f_{Da}), **caractérisé en ce que,** à partir d'une relation connue entre la fréquence d'impulsions (f_{Db}) et la vitesse d'avancement de fil de soudage (v_{Db}) du deuxième processus de soudage par impulsion, des valeurs idéales pour la deuxième fréquence d'impulsions (f_{Db}) et pour la deuxième vitesse d'avancement de fil de soudage (v_{Db}) sont déterminées, **en ce qu'**une valeur effective (RMSₒₚₜ) idéale du deuxième courant de soudage (I_{Sb}) est déterminée avec les valeurs de réglage idéales et un rapport idéal (Vₒₚₜ) entre la valeur effective (RMSₒₚₜ) et la vitesse d'avancement de fil de soudage (v_{Db}) est déterminée avec la valeur effective (RMSₒₚₜ) idéale et a valeur de réglage idéale de la deuxième vitesse d'avancement de fil de soudage (v_{Db}), **en ce que**, avec le deuxième courant de soudage (I_{Sb}) avec la deuxième fréquence d'impulsions (f_{Db}), une valeur effective (RMSₙₒₚₜ) réelle du deuxième courant de soudage (I_{Sb}) est déterminée et avec cela un rapport (V) réel entre la valeur effective (RMSₙₒₚₜ) réelle et la vitesse d'avancement de fil de soudage (v_{Db}) à régler du deuxième processus de soudage par impulsion est déterminé **et en ce que** au moins un paramètre de courant d'impulsion du deuxième courant de soudage (I_{Sb}) du deuxième processus de soudage par impulsion et/ou la vitesse d'avancement de fil de soudage (v_{Db}) est modifié, pour modifier le rapport (V) réel au rapport (Vₒₚₜ) idéal.

2. Procédé selon la revendication 1, **caractérisé en ce que** la vitesse d'avancement de fil de soudage (v_{Db}) du deuxième processus de soudage par impulsion est couplée à une deuxième fréquence d'impulsions (f_{Dbopt}) idéale ou la deuxième fréquence d'impulsions (f_{Db}) à régler du deuxième processus de soudage par impulsion est couplée à une deuxième vitesse d'avancement de fil de soudage (v_{Db}) idéale, **en ce que** une valeur effective (RMSₒₚₜ) idéale du deuxième courant de soudage (I_{Sb}) est déterminée à partir du deuxième courant de soudage (I_{Sb}) avec la fréquence d'impulsions (f_{Dopt}) idéale et, à partir de cela, un rapport (Vₒₚₜ) idéal entre cette valeur effective (RMSₒₚₜ) idéale et la vitesse d'avancement de fil de soudage (v_{Db}) prédéfinie est déterminé ou une valeur effective (RMSₒₚₜ) idéale du deuxième courant de soudage (I_{Sb}) est déterminée à partir du deuxième courant de soudage (I_{Sb}) avec la deuxième fréquence d'impulsions (_{Db}) à régler et, à partir de cela, un rapport (Vₒₚₜ) idéal entre cette valeur effective (RMSₒₚₜ) idéale et la vitesse d'avancement de fil de soudage (v_{Db}) idéale est déterminé.

3. Procédé selon la revendication 1 ou 2, **caractérisé en ce que** la deuxième fréquence d'impulsions (f_{Db}) découle de la première fréquence d'impulsions (f_{Da}) à partir d'un rapport de fréquence d'impulsions entier prédéterminé entre la première fréquence d'impulsions (f_{Da}) et la deuxième fréquence d'impulsions (f_{Db}).

4. Procédé selon la revendication 3, **caractérisé en ce que** le rapport de fréquence d'impulsions est en outre modifié, pour modifier le rapport (V) réel au rapport (Vₒₚₜ) idéal.

5. Procédé selon l'une quelconque des revendications 1 à 4, **caractérisé en ce que** la valeur effective (RMS) du courant de soudage (I_{Sb}) du deuxième processus de soudage par impulsion est réglée ou commandée par la modification d'au moins un paramètre de courant d'impulsion du courant de soudage (I_{Sb}) du deuxième processus de soudage par impulsion à la valeur effective (RMSₒₚₜ) idéale.

6. Procédé selon l'une quelconque des revendications 1 à 5, **caractérisé en ce que,** en tant qu'un paramètre de courant d'impulsion, un courant d'impulsion (I_{SIb}), un courant de base (I_{SGb}), une durée de courant d'impulsion, une durée de courant de base, un flanc ascendant de courant ou un flanc descendant de courant du deuxième courant de soudage (I_{Sb}) est modifié.

7. Dispositif pour l'exécution d'un procédé de soudage par impulsion multiple, dans lequel au moins deux appareils de soudage exécutant respectivement avec un courant de soudage (I_{Sa}, I_{Sb}) ayant des paramètres de courant de soudage, avec une fréquence d'impulsions (f_{Da}, f_{Db}) à régler et avec une vitesse d'avancement de fil de soudage (v_{Da}, v_{Db}) à régler, un premier processus de soudage par impulsion prédéfinissant une première fréquence d'impulsions (f_{Da}) et la deuxième fréquence d'impulsions (f_{Db}) à régler dans un deuxième processus de soudage par impulsion découlant de la première fréquence d'impulsions (f_{Da}), **caractérisé en ce qu'**une unité de commande (7b), laquelle exécute le deuxième processus de soudage par impulsion, est conçue pour déterminer une valeur effective (RMSₒₚₜ) idéale du deuxième courant de soudage (I_{Sb}), par la détermination, par l'unité de commande (7b), à partir d'une relation connue entre la fréquence d'impulsions (f_{Db}) et la vitesse d'avancement de fil de soudage (v_{Db}) du deuxième processus de soudage par impulsion, de valeurs de réglage idéales pour la deuxième fréquence d'impulsions (f_{Db}) et pour la deuxième vitesse d'avancement de fil de soudage (v_{Db}), et l'unité de commande (7b) étant conçue pour déterminer avec les valeurs de réglage idéales la valeur effective (RMSₒₚₜ) idéale du deuxième courant de soudage (I_{Sb}), **en ce que** l'unité de commande (7b) est conçue pour déterminer, avec la valeur effective (RMSₒₚₜ) idéale et la valeur de réglage idéale de la deuxième vitesse d'avancement de fil de soudage (v_{Db}), un rapport (Vₒₚₜ) idéal entre la valeur effective (RMSₒₚₜ) et la vitesse d'avancement de fil de soudage (v_{Db}), **en ce que** l'unité de commande (7b) est conçue pour déterminer, avec le deuxième courant de soudage (I_{Sb}) avec la deuxième fréquence d'impulsions (f_{Db}) à régler, une valeur effective (RMSₙₒₚₜ) réelle du deuxième courant de soudage (I_{Sb}) et, avec cela, un rapport (V) réel entre la valeur effective (RMSₒₚₜ) réelle et la vitesse d'avancement de fil de soudage (v_{Db}) à régler du deuxième processus de soudage par impulsion **et en ce que** l'unité de commande (7b) est conçue pour modifier au moins un paramètre de courant d'impulsion du deuxième courant de soudage (I_{Sb}) du deuxième processus de soudage par impulsion et/ou la vitesse d'avancement de fil de soudage (v_{Db}) du deuxième processus de soudage par impulsion, pour modifier le rapport (V) réel au rapport (Vₒₚₜ) idéal.

8. Dispositif selon la revendication 7, **caractérisé en ce que** l'unité de commande (7b) est conçue pour déterminer, à partir de la vitesse d'avancement de fil de soudage (v_{Db}) à régler du deuxième processus de soudage par impulsion, une deuxième fréquence d'impulsions (f_{Dbopt}) couplée à celle-ci ou pour déterminer, à partir de la deuxième fréquence d'impulsions (f_{Db}) à régler du deuxième processus de soudage par impulsion, une deuxième vitesse d'avancement de fil de soudage (v_{Db}) idéale couplée à celle-ci, et l'unité de commande (7b) est conçue pour déterminer, à partir du deuxième courant de soudage (I_{Sb}) avec la deuxième fréquence d'impulsions (f_{Dbopt}) idéale ou avec la deuxième fréquence d'impulsions (f_{Db}) à régler, la valeur effective (RMSₒₚₜ) idéale du deuxième courant de soudage (I_{Sb}), et l'unité de commande (7b) est conçue pour déterminer le rapport idéal (Vₒₚₜ) entre cette valeur effective (RMSₒₚₜ) idéale et la vitesse d'avancement de fil de soudage (v_{Db}) à régler ou idéale.
